# EUROPÄISCHE PATENTANMELDUNG

(11) **EP 1 507 182 A1**
(43) Veröffentlichungstag der Anmeldung: **16.02.2005**
(21) Anmeldenummer: 04102901.8
(22) Anmeldetag: 23.06.2004
(51) Int. Cl.: G05B 19/042, G05B 19/404

(54) **Verfahren zur Verschleisserkennung bei Extrudermaschinen**

(30) Priorität: 14.08.2003 DE 10337799; 20.11.2003 DE 10354273
(71) Anmelder: Battenfeld Extrusionstechnik GmbH, 32547 Bad Oeynhausen (DE)
(72) Erfinder: Becker, Klaus, 32584 Löhne (DE); Kreth,Dr.-Ing.Norbert, 32429 Minden (DE); Schulz, Jürgen, 01987 Schwarzheide (DE)

(57) **Zusammenfassung**

Die Erfindung betrifft ein Verfahren zur Verschleißermittlung bei Extrusionsmaschinen, das die Schritte umfasst: a) Ermittlung mindestens eines Parameters einer Extrusionsmaschine als Referenzpunkt (R), wobei mit einem definierten Material unter definierten Prozeßbedingungen die Anlage gefahren wird und der Maschinenparameter bestimmt wird, b) Berechnen einer Masterkurve (3) auf Basis dieses Referenzpunktes (R), c) kontinuierliches Ermitteln dieser Maschinenparameter (M₂) während des laufenden Prozesses, d) Berechnen einer Vergleichskurve (4), wobei mittels bekannter mathematischer Verfahren Störgrößen geglättet werden, e) Bestimmung der Abweichung der ermittelten Vergleichskurve (4) zur Masterkurve (3), bis eine vorbestimmte Abweichung ermittelt wird.

## Beschreibung

Die Erfindung betrifft ein Verfahren zur Verschleißermittlung, bei dem ermittelte Messwerte mit Referenzpunkten verglichen werden.

Bei Kunststoffverarbeitungsmaschinen tritt abrasiver, erosiver, korrosiver und adhäsiver Verschleiß auf. Der häufig abrasive Verschleiß bei Einschneckenextrudern (ESE) entsteht im Wesentlichen durch den relativ hohen Druck im Bereich der Nutbuchse, bei Doppelschneckenextrudern ist adhäsiver Verschleiß im Bereich der Druckaufbauzonen typisch. Verschleißbilder und -raten sind stark vom zu verarbeitenden Material abhängig und damit auch vom Beimischen abrasiver Füllstoffe.

Um den Verschleiß der Schnecke, des Zylinders oder der Nutbuchse (bei ESE) festzustellen, werden die genannten Maschinenteile in regelmäßigen Abständen ausgebaut und vermessen. Erst nach der Vermessung kann entschieden werden, ob ein neues Maschinenteil bzw. dessen Reparatur notwendig ist.

Hieraus lassen sich folgende wirtschaftliche Nachteile der bisherigen Vorgehensweise ableiten:
◆ Produktions- bzw. Nutzungsausfall während der Umbauzeiten der Anlage. Eine Verschleißmessung bzw. -beurteilung setzt einen Produktionsstopp voraus, da das betreffende Maschinenteil ausgebaut werden muß.
◆ Ein zu spätes Erkennen von starkem Verschleiß an der Verfahrenseinheit kann auch zu längeren Standzeiten der Produktionsanlage führen, wenn die angestrebte Qualität des Endproduktes bzw. die Wirtschaftlichkeit nicht mehr gegeben ist (Lieferzeit für Schnecke, Nutbuchse und Zylinder 4-6 Wochen).
◆ Produktionsausschuß, weil infolge des auftretenden Verschleißes die Verfahrensaufgaben nicht mehr zufriedenstellend gelöst werden können. Als Beispiel kann hier die geringere Durchsatzleitung und eine schlechtere Plastifizierleistung angegeben werden.

**Aufgabe** der vorliegenden Erfindung ist es, ein Verfahren anzubieten, bei dem eine automatische Erkennung und eine frühzeitige Meldung eines Verschleißzustandes, beispielsweise der Schnecke, des Zylinders oder der Nutbuchse eines Einschneckenextruders erfolgt, ohne daß ein Ausbau dieser Verfahrenseinheiten und ein manuelles Vermessen erforderlich ist.

Die **Lösung** dieser Aufgabe ist durch die Verfahrensschritte gemäß Anspruch 1 oder 2 gegeben. Die Unteransprüche offenbaren vorteilhafte Weiterbildungen.

Das Auftreten von Verschleiß führt zu Änderungen der Maschinendaten und Maschinenparameter. Es kann somit, wie in Anspruch 1 vorgeschlagen, in einem diskontinuierlichen Verfahren eine Masterkurve zu den Maschinendaten und Maschinenparametern wie Förderverhalten, Förderrate oder der Massedruckverlauf in der Verfahrenseinheit aufgenommen werden. Hierbei ist wichtig, daß dies mit verschiedenen Materialien und bei definierten Parametern erfolgt. Diese Bestimmungen der Parameter werden zyklisch nach n Betriebsstunden und unter gleichen Prozeßbedingungen wiederholt. Ein Vergleich mit der Masterkurve bzw. den Masterkurven gibt Aufschluß über den Verschleiß der jeweiligen Verfahrenseinheit. Die Abweichung kann graphisch dargestellt werden und bei Erreichen eines vorbestimmten Wertes kann eine bestimmte Meldung ausgegeben werden.

Basierend auf den Überlegungen und Erkenntnissen dieses diskontinuierlichen Verfahrens werden kontinuierliche Aufzeichnungen von den relevanten Maschinendaten und Maschinenparametern gemäß den Verfahrensschritten des Anspruchs 2 durchgeführt.

Eine Langzeitauswertung dieser Daten mit geeigneten mathematischen Verfahren soll die Maschinendaten und -parameter in Korrelation mit dem Verschleißwert bringen. Dies beinhaltet die Elimination von Störgrößen und die Berechnung von Master- und Korrekturkurven etc.. Insbesondere steht die Betrachtung der Zeitkonstanten im Vordergrund, im Gegensatz zu der großen Verschleißzeitkonstante ( z. B. 20000 Betriebsstunden ) sind Störungen wie Material- und Chargenwechsel, Änderungen der Einzugsbuchsen- und Materialtemperatur kleine Zeitkonstanten ( z. B. <100 Betriebsstunden ), die mittels Vergleich mit den aufgezeichneten Maschinendaten und -parametern erkennbar sind und entweder vernachlässigt werden können oder auf eine für den Verschleißwert berechnete Masterkurve projizierbar sind.
◆ Relevante Maschinendaten und -parameter sind z. B. Förderverhalten, - rate, Massedurchsatz, Extruderdrehzahl, -drehmoment, Massedruck, Zylindertemperaturprofil ,die Einzugsbuchsen- und Materialtemperatur oder Massetemperatur, aber auch Chargen-, und Materialwechsel werden erfaßt.
◆ Thematische Verfahren sind z. B. Expertensysteme, Fuzzytechnologie, neuronale Netze, evolutionäre Strategien, statistische Methoden.

Diese Datenaufzeichnung und -auswertung kann sowohl auf einem maschinenintemen PC als auch auf einem im Intranet stehenden externen PC durchgeführt werden.

Weitere vorteilhafte Weiterbildungen sind in den Unteransprüchen wiedergegeben.

Mit dem dargelegten neuen Verfahren ist es möglich, den Verschleiß einer Extrudermaschine zu erkennen, ohne daß die Verfahrenseinheiten ausgebaut und manuell vermessen werden müssen.

In den Zeichnungen sind schematisch verschiedene Kurven dargestellt:
- Fig. 1: zeigt eine diskontinuierliche Ermittlung
- Fig. 2: zeigt eine kontinuierliche Ermittlung

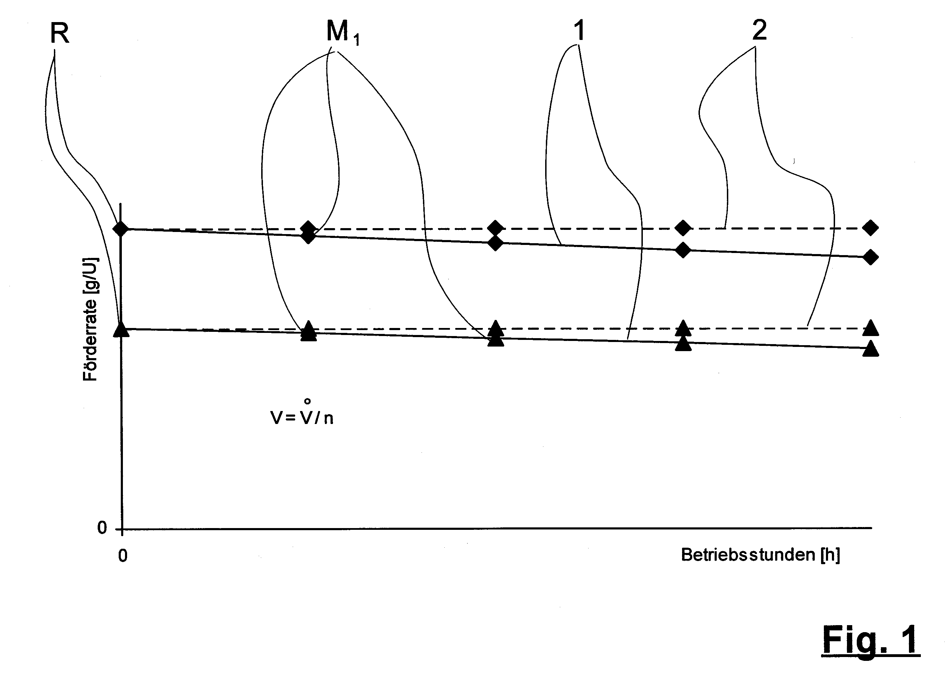

In Figur 1 ist beispielhaft die Aufzeichnung zweier Kurvenpaare für unterschiedliche Materialien dargestellt. Ausgehend vom jeweils ermittelten Referenzpunkt ist die Masterkurve 1 parallel zur Achse für die Betriebsstunden wiedergegeben. Nach einer entsprechenden Anzahl von Betriebsstunden (hier sind es vier Betriebseinheiten) werden die Maschinenparameter M1 erneut ermittelt und eingetragen. Mittels dieser Maschinenparameter M1 unter Zuhilfenahme des Referenzpunktes R ist eine Vergleichskurve 2 ermittelbar. Diese Vergleichskurve 2 weicht naturgemäß von ihrer zugehörigen Masterkurve 1 ab. Der Abstand der beiden Kurven stellt den jeweiligen Verschleiß nach n Betriebsstunden dar. Sobald eine vorbestimmte Abweichung erreicht ist, werden bestimmte Maßnahmen ergriffen. Dies kann die Ausgabe einer Meldung oder die Aktivierung einer Warnlampe sein.

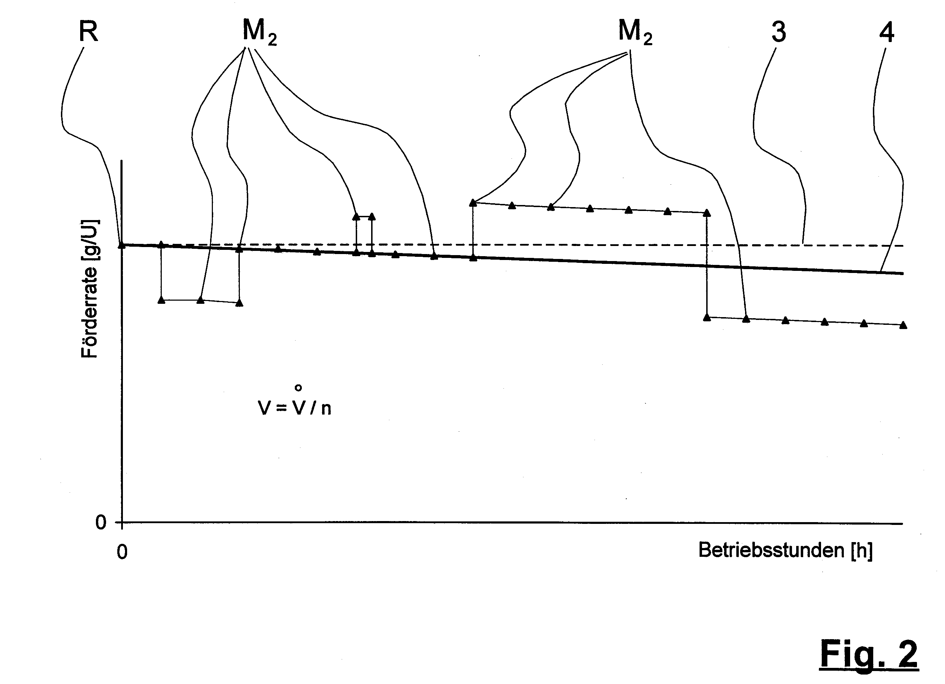

Die Figur 2 zeigt die Aufzeichnung eines Kurvenpaares im kontinuierlichen Verfahren. Auch hier wurde die Förderrate über den Betriebsstunden aufgezeichnet. Ausgehend vom ermittelten Referenzpunkt R ist eine Masterkurve 3 aufgetragen. Abweichend zum diskontinuierlichen Verfahren muß die Masterkurve 3 keine Gerade sein, da in die Berechnung der Kurve Erfahrungswerte bekannter Störgrößen wie Änderung der Materialtemperatur etc. einfließen können. Während des normalen Prozesses werden die Maschinenparameter M2 aufgezeichnet und in die Graphik übertragen. Mittels bekannter mathematischer Verfahren werden die aufgezeichneten Werte M2 geglättet und so eine Vergleichskurve 4 ermittelt. Wie im diskontinuierlichen Verfahren spiegelt die Abweichung zur Masterkurve 3 den Verschleiß wider. Auch hier werden bei Erreichen eines vorbestimmten Abstandswertes entsprechende Maßnahmen ergriffen.

### Bezugszeichenliste:

- 1: Masterkurve bei diskontinuierlicher Ermittlung
- 2: Vergleichskurve bei diskontinuierlicher Ermittlung
- 3: Masterkurve bei kontinuierlicher Ermittlung
- 4: Vergleichskurve bei kontinuierlicher Ermittlung

- R: Referenzpunkt
- M₁: Maschinenparameter bei diskontinuierlicher Ermittlung
- M₂: Maschinenparameter bei kontinuierlicher Ermittlung

## Patentansprüche

1. Verfahren zur Verschleißermittlung bei Extrusionsmaschinen das die Schritte umfasst:
a) Ermittlung mindestens eines Parameters einer Extrusionsmaschine als Referenzpunkt (R), wobei mit einem definierten Material unter definierten Prozeßbedingungen die Anlage gefahren wird und der Maschinenparameter bestimmt wird,
b) Definieren einer Masterkurve (1) aus diesem Referenzpunkt (R) mit einer Steigung gleich Null,
c) erneutes Ermitteln dieses Maschinenparameters (M₁) gemäß dem Verfahrensschritt a), wobei die Ermittlung nach einer vorbestimmten Anzahl von Betriebsstunden und unter gleichen Bedingungen erfolgt wie bei der Ermittlung der Referenzpunkte (R),
d) Ermitteln einer Vergleichskurve (2) aus dem Referenzpunkt (R) und dem gemäß Schritt d) ermittelten Maschinenparameter (M),
e) Bestimmung der Abweichung der ermittelten Vergleichskurve (2) zur Masterkurve (1),
f) Wiederholen der Verfahrensschritte d) bis f), bis eine vorbestimmte Abweichung ermittelt wird.

2. Verfahren zur Verschleißermittlung bei Extrusionsmaschinen, das die Schritte umfasst:
a) Ermittlung mindestens eines Parameters einer Extrusionsmaschine als Referenzpunkt (R), wobei mit einem definierten Material unter definierten Prozeßbedingungen die Anlage gefahren wird und der Maschinenparameter bestimmt wird,
b) Berechnen einer Masterkurve (3) auf Basis dieses Referenzpunktes (R),
c) kontinuierliches Ermitteln dieser Maschinenparameter (M₂) während des laufenden Prozesses,
d) Berechnen einer Vergleichskurve (4), wobei mittels bekannter mathematischer Verfahren Störgrößen geglättet werden,
e) Bestimmung der Abweichung der ermittelten Vergleichskurve (4) zur Masterkurve (3), bis eine vorbestimmte Abweichung ermittelt wird.

3. Verfahren nach Anspruch 1 oder 2, **dadurch gekennzeichnet, dass** als Parameter das Förderverhalten, die Förderrate, die Extruderdrehzahl, das Exdruderdrehmoment, die Materialtemperatur oder der Massedruck ermittelt wird.

4. Verfahren nach Anspruch 1 oder 2, **dadurch gekennzeichnet, dass** als Parameter der Massedurchsatz, die Zylindertemperatur, die Einzugsbuchsentemperatur, oder die Massetemperatur ermittelt wird.

5. Verfahren nach Anspruch 4, **dadurch gekennzeichnet, dass** die Parameter in der Verfahrenseinheit ermittelt werden.

6. Verfahren nach Anspruch 3 oder 4, **dadurch gekennzeichnet, dass** die ermittelten Parameter (M₁, M₂) gespeichert werden.

7. Verfahren nach Anspruch 6, **dadurch gekennzeichnet, dass** Aufzeichnung und Berechnung mittels eines in der Extrudermaschine integrierten PC's erfolgt.

8. Verfahren nach Anspruch 6, **dadurch gekennzeichnet, dass** Aufzeichnung und Berechnung mittels eines mit einem Intranet verbundenen PC erfolgt.
